# EUROPEAN PATENT APPLICATION

(11) **EP 4 443 678 A1**
(43) Date of publication of application: **09.10.2024**
(21) Application number: 24164889.8
(22) Date of filing: 20.03.2024
(51) Int. Cl.: H02G 1/12, H01R 43/28

(54) **ELECTRICAL WIRE STRIPPING SOLUTION FOR AUTOMATED SPLICING OR WELDING**

(30) Priority: 20.03.2023 EP 23162998; 19.03.2024 EP 24164688
(71) Applicant: Aptiv Technologies AG, 8200 Schaffhausen (CH)
(72) Inventor: Manterys, Marek, 1600-514 Lisboa (PT); Medeiros Ferreira da Silva, Marco Ruben, 1600-514 Lisboa (PT); Anunciacao, Filipe, 1600-514 Lisboa (PT); Fronc, Sebastian, 1600-514 Lisboa (PT); Ribeiro Antunes, Nuno Tiago, 1600-514 Lisboa (PT)
(74) Representative: INNOV-GROUP

(57) **Abstract**

A stripping tool (200) for stripping an end portion of an electric wire having an electric conductor covered by an insulating sheath, the stripping tool comprising a body (201) with a longitudinally extending receiving portion (230) arranged to receive the end portion, a clamping lever (210) articulated with the body so as to be moveable between a rest position and a deflected position, and a first elastic member (240) arranged to apply a return force on the lever, wherein the lever is moved from the rest position to the deflected position by insertion of the end portion of the wire, and wherein the lever has an abutting tab portion (213) arranged to apply a stripping effort to the end portion of the wire during removal of the wire out of the receiving portion.

The tool can further include a wire retaining member (900) having a longitudinally extending slot (920), a locking tab (910) mounted in the slot (920) and adapted to be moved vertically from a wire lock position to a wire release position, and vice versa, and a second elastic member (940) adapted to apply a return force to the locking tab (910) in order to place the tab in the wire lock position in the absence of any contrary action (F).

## Description

### TECHNICAL FIELD

The present disclosure relates generally to the field of electric wires processing and assembly, and in particular to automatic wire stripping and splicing or welding . This is of interest and finds applications, for example, in the industrial production of cable harnesses for the automotive industry in particular, for example for the electrical distribution system of vehicles.

### BACKGROUND

Tools and apparatus for splicing or welding of electric wires are known in the art. Known manufacturing processes consist in making manual butt or dual end splice (inline splice), that is to say at the end of a wire or between two wire ends, respectively.

Manual splicing has a lot of quality problems and consumes manpower. In particular, the precision on wire positioning in the welding area, i.e., vertical positioning and end of core positioning of the different wires, is poor since it is operator dependent. In addition, the manufacturing cycle time is long.

Automatic butt splice solution is not very developed, in particular because of the lower volume of butt splice configurations (e.g. 15% of splices) compared to volume of dual end splices (e.g. 85% of total splices) in typical projects using splices.

Reference CA641470 discloses a splicing device wherein the splicing is realized by crimping of a metallic splicing sleeve by means of a crimping tool.

Reference GB1033614 discloses a cable-stripping device having a pair of notched jaws of lever-like form, pivotally mounted adjacent relatively on a common support member. Each jaw is formed at the inner end with a notch or notches. A wire to be stripped can be admitted between the jaws. The jaws are urged to a closed position at which they engage in a toggle-like manner with the wire. When the wire held between them is withdrawn, the jaws are forced increasingly together to strip the insulation of the wire in their vicinity. In one embodiment, an air-operated piston closes the jaws. In other embodiments various types of spring arrangements are described for closing the jaws, and in another a lever-operated pressure plate is provided.

Reference WO2013/009167 discloses a device for twisting together end areas of a number of wires surrounded by a cover or coating layer. The device includes a stripper module arranged for stripping the end areas of wires over a predetermined stripping length, before subsequently twisting those stripped wire areas by inserting them into a twister module and rotating it around its axis.

Reference DE102017206139 discloses an installation and method for the automated production of a cable set, which has a branched structure of a plurality of individual line elements. In a modular set-up, the installation has two parts. A plurality of first processing stations are arranged in the first part, and a plurality of second processing stations are arranged in the second part. In the first part, there is an automatic preparation of the individual line elements, which are then collected in a buffer station at the end of the said part. In the second part, the prepared individual line elements are assembled into the cable set. For that purpose, the line elements are plugged into connector casings in a connector station and transferred to second transporters. The branched structure of the cable set is then formed by displacement along second rails by means of said second transporters. In this spread-apart branched structure, inter alia, the line elements are fixed to one another in a fixing station.

There is a need for an alternative solution for overcoming different drawbacks of the prior art, in particular the problem of allowing automatic stripping of wires having different cross-sections, e.g., ranging from 0,13 mm² to 2,5 mm², with one and the same stripping tool.

### SUMMARY

The present disclosure concerns a stripping tool for stripping an end portion of an electric wire having an electric conductor covered by an insulating sheath, said end portion of the electric wire being preferably separated from a main portion of said electric wire by a pre-stripped portion of said electric wire,
the stripping tool comprising:
   - a main body with at least one receiving portion arranged to receive the end portion of the electric wire,
   - at least one lever articulated within the main body so as to be moveable between a rest position and a deflected position,
   - a first elastic member arranged to apply a return force on the first lever from the deflected position to the rest position,
wherein the lever has a guiding portion arranged in front of, or in regard of, the receiving portion of the main body, so that the lever is moved from the rest position to the deflected position by insertion of the end portion of the electric wire into the receiving portion, and
wherein the lever has an abutting tab portion arranged to apply a stripping effort to the end portion of the electric wire during removal of the electric wire out of the receiving portion.

In advantageous embodiments, the body of the further comprises a wire guiding portion disposed in the rear side of said body, behind said main body with respect to the direction of insertion of wires into the receiving portions, in continuity with the respective through holes of said receiving portions.

According to embodiments, the wire guiding portion can comprise at least one guiding channel and preferably a plurality of laterally adjacent guiding channels, arranged as rear extensions of respective through holes in the receiving portion of the body, extending from the opposite side of said receiving portions, the guiding channels being adapted to accommodate respective end portions of wires to be stripped.

This allows to provide a stripping tool able to cooperate with an automated system. Further, this allows to provide an easy solution for stripping an electric wire, with a simple tool at reduced cost, which is convenient and intuitive to use, for example by an automated system either equipped with a position control and map control (where the hole position is indicated) or hole or receiving portion detector. Further, there is no need of energy supply because of the arrangement of elastic member(s) in conjunction with the first lever and/or the second lever.

In some embodiments, the guiding channels can have an inverted U-shaped cross-section.

The stripping tool can further comprise a wire retaining member having:
- a core,
- longitudinally extending slots formed in the core,
- locking tabs respectively mounted in the slots, and adapted to be moved from a wire lock position to a wire release position, and vice versa, and
- a second elastic member adapted to apply a return force to the locking tab in order to place said tab in the wire lock position in the absence of any contrary action.

In some embodiments, the locking tab can have a sloping front surface configured to receive an external force causing said locking tab to move from the wire lock position to the wire release position against the force of the second elastic member.

The problem of keeping pre-stripped wires in same plugging position without any change of position due to transportation from the auto-plugging area to the welding/splicing area of the workstation can thus be solved by a secondary wire lock function added to the stripping tool, that automatically locks wires within the stripping tool as soon as the stripping tool is removed from plugging machine and automatically unlocks wires as soon as the plugging tool is placed in position in the welding or splicing machine after transportation from the auto-plugging area to welding/splicing area.

The problem of removing the insulation jacket of pre-stripped wires is solved by the specially designed stripping mechanism in the stripping tool that locks the insulation jacket inside the stripping tool when the robot is removing pre-stripped wires out of the stripping tool, just before carrying out welding or splicing process at the welding or splicing machine.

Thus, embodiments offer an opportunity for quality improvement, as they make it possible to avoid the use of labor for stripping wires. More specifically, the occurrence of defects related to wire positioning during the whole harness production process can be reduced.

Embodiments further make it possible to simultaneously process different wire types, in particular from the entire cross-section range of 0.13 to 2.5 mm². This enables the manufacture of a wide range of different wire harnesses while reducing production time and manufacturing costs significantly.

In other words, the disclosure concerns a stripping tool for receiving one or more electrical wires, the electrical wires having a main insulating sheath portion, an insulating sheath end portion and a pre-stripped portion arranged therebetween,
wherein the stripping tool comprises:
   - a core member with one or more receiving through holes each having an insertion portion adapted to allow insertion of at least one electrical wire, and an opposed portion,
   - at least one first lever (namely a clamping lever), movably arranged and preferably rotatably arranged within a respective one of the receiving through holes,
   - a first elastic member (preferably arranged to apply a return force on the first lever, for instance a spring, preferably an helical spring, and more preferably an helical compression spring,
wherein the first lever has a proximal portion rotatably connected to the core, a distal portion arranged in front of the opposed portion to allow forced insertion of the electrical wire, and an abutment tab portion arranged on the distal portion and adapted to cause detachment of the insulating sheath end portion of the electrical wire when said wire has been fully inserted in the stripping tool and is later pulled out.

Advantageously, the receiving portion has a through hole with an insertion side and an opposed side, the receiving portion being preferably conical in shape.

This allows to ensure a correct insertion of the electric wire in the receiving portion. Also, it is to be noted that the end portion equipped with the insulating sheath facilitates the insertion compared to a stripped end wherein the strands may be curved or bent and difficult to insert in the receiving portion.

Advantageously, the electrical wire can have a cross-section from 0,13 mm² up to 2.5 mm². The skilled person will appreciate that different configurations of the stripping tool can be designed to accommodate other cross-section of cables, e.g., for wire cross-sections from 2.5 mm² up to 4 mm², or from 2.5 mm² up to 6 mm², or for still higher cross-section ranges.

Alternatively, the stripping tool can be designed to accommodate electrical wire with cross-section smaller or larger than the ranges disclosed herein.

For example, the stripping connector can be configured to allow stripping of electrical wire having a cross-section from 0,1 mm² to 0.2 mm², 0,1 mm² to 0.5 mm², 0,1 mm² to 1 mm².

Advantageously, the through hole can have a diameter on the insertion side larger than 5 mm and a diameter on the opposed side larger than 3 mm, in particular for electrical wire having a cross-section from 0,13 mm² up to 2.5 mm².

Advantageously, the through hole has a diameter on the insertion side larger than 10 mm and a diameter on the opposed side larger than 6 mm, in particular for electrical wire having a cross-section from 2.5 mm² up to 6 mm².

Alternatively, the diameter of the through hole on the insertion side and the diameter on the opposed side may be smaller or larger than the values disclosed herein for electrical wires having smaller or larger cross-sections, respectively.

For example, the through hole can have a diameter on the insertion side larger than 3 mm, preferably larger than 4 mm, more preferably larger than 6 mm, and a diameter on the opposed side larger than 2 mm, preferably larger than 4 mm, more preferably larger than 5 mm.

This allows for an easy insertion of the electrical wires in the stripping tool.

Advantageously, the stripping tool can have a plurality of receiving portions, preferably two or more, more preferably seven or more.

This allows to place and receive a plurality of electric wires and increase the number of wires being welded or spliced at the same time.

In some advantageous embodiments, the end portion of the electric wire can be separated from a main portion of the electric wire by a pre-stripped portion, and the abutting tab portion can be arranged to abut with the end portion of the electric wire on the side of the pre-stripped portion, when the end portion of the electric wire is inserted inside the receiving portion.

This allows to provide partially pre-stripped wires so as to enhance the productivity, in particular due to the problem of positioning, storing and inserting wires including multi-strands wires.

Advantageously, the guiding portion of the lever can be arranged between the abutting portion and an articulated portion of said lever.

This allows to ease the insertion of the electric wire and the deflection of the lever.

Advantageously, the body can be made of plastic, and preferably by additive manufacturing or three-dimensional printing.

This allows to facilitate the manufacturing and to conserve production costs.

Alternatively, the body can be made of metal, and preferably by additive manufacturing or three-dimensional printing.

Advantageously, the elastic member, the lever and/or a lever shaft of the stripping tool are made in metal, preferably steel or copper. The lever is preferably made in a soft metal to avoid scratching.

This allows to facilitate the insertion of the electric wire, to allow sufficient force transmission for stripping, and life time of the stripping tool.

Alternatively, the elastic member, the lever and/or a lever shaft of the stripping tool are made in plastic.

Advantageously, the elastic member, the lever and/or a lever shaft of the stripping tool can be made in plastic, with a coating preferably in steel or copper, or any other material harder than plastic.

A second aspect of the present disclosure concerns an automated system comprising the stripping tool according to the first aspect, a welding machine being preferably an ultrasonic welding machine or a splicing machine, and a robot arm arranged to transport one or more electric wires from the stripping tool to the welding machine or the splicing machine.

This allows to solve the mentioned problem as follows. That is, the problem of inserting wires in welding or splicing area by hand with its consequent mistakes, is solved by an automated system manipulation of wires, with a robot arm for example. Additional efficiencies are possible when the automated system has at least two pallets, also known as connector pallets. The robot arm removes a first wire or first set of wires from a first stripping tool installed on a first pallet while the automated system is simultaneously inserting a second wire or second set of wires into a second stripping tool installed on a second pallet. It is thereby possible for the robot arm to work with the first wires from the first pallet, e.g., to perform the stripping step and/or a splicing or welding step during the time the automated system is inserting the second wires into the second stripping tool on the second pallet or doing the pre-stripping step. Utilizing multiple pallets in this manner results in cycle time efficiencies. That is, there is no penalization on plugging cycle time.

The problem of misaligned wires manipulated by an operator or missing wires is solved by the stripping tool that is installed on a connector pallet nearby the robot arm that presents all wires in a perfectly aligned manner. Parts of the automated system may be used from a Zeta/Omega machine available from the company Komax AG.

The problem of taking wires and aligning them perfectly is assured by a single or a double gripper system (e.g. a gripper portion and an aligner portion) in the robot arm of the automated system that keep the ends of the wires aligned as well as place them preferably horizontally or vertically.

The problem of making dual end splicing instead of only butt splice is ensured by an additional (fixed) gripper placed on an extremity of the welding machine (or module, or splicing machine) that will hold the wires on one side of the splice while the robot arm picks the other extremity wires and take them to the machine.

Further, this allows to have the following advantages:
1. Elimination of manual work with respect to the splicing process,
2. Dramatic reduction of quality problems related to manual splicing,
3. High flexible solution in terms of cross-section of wires or number of wires, and possibility to have butt and dual end (inline) configurations,
4. Quick cycle time,
5. Integration on automatic plugging machine,
6. Very low investment,
7. Floor space reduction,
8. Automation percentage increase on harness or wire industry,
9. 100% (full) control on splicing process with traceability.

Stated otherwise, embodiments make it possible to manufacture a wide range of different wire harnesses and reduce manufacturing costs and production time significantly.

Still further, this eliminates a big roadblock of the one skilled in the art that was: "splicing is an impossible process for automation".

Advantageously, the arm comprises a mobile gripper portion arranged to grab the one or more electric wires and/or an aligner portion arranged to maintain alignment of the one or more electric wires.

This allows to grab and pull the electric wires and to keep them aligned or in their respective positions when there are several wires.

Advantageously, the automated system has a pallet, preferably vertically installed, and the stripping tool is installed on the pallet.

In an embodiment, the pallet is installed on a machine available on the market, such as from the company Komax Holding AG (Omega machine or the like).

Advantageously, the robot arm comprises a fixed gripper portion arranged to grab the one or more electric wires nearby, or in front of, the welding machine or the splicing machine.

This allows to have dual end splicing or welding.

Advantageously, the automated system comprises a control unit.

Advantageously, the automated system comprises a processing unit.

Advantageously, the automated system comprises a positioning unit for positioning the robot arm, the aligner portion and/or the mobile gripper portion.

Advantageously, the automated system comprises a mapping unit for storing or receiving the position of the stripping tool, and in particular of the one or more receiving portions, and position of the other components such as the welding machine or splicing machines, the storage of the wires, etc.

Advantageously, the automated system comprises a detection unit configured to detect the one or more receiving portions, the one or more electric wires, or any other object.

Advantageously, the automated system comprises a power storage or a general electric supply connection.

Advantageously, the automated system has a first pallet on which a first stripping tool is installed and a second pallet on which a second stripping tool is installed.

The first pallet and/or the second pallet may be fixed or mobile.

In a third aspect, the present disclosure concerns a method using the automated system of the second aspect for automatic welding or splicing of one or more electric wires having an electric conductor covered by an insulating sheath and having an end portion thereof, wherein the electric conductor has strands or monolithic electric element,
the method comprising the steps of:
   - inserting the end portion of the electric wire into the receiving portion of the stripping tool,
   - abutting the end portion of the electric wire on the abutting tab portion,
   - removing the end portion of the electric wire from the receiving portion so as to strip the electric wire,
   - transporting the one or more wires to the welding or splicing machine,
   - welding or splicing strands of the at least one electric wire, or welding or splicing strands or monolithic electric elements of at least two electric wires,
wherein the step of inserting and the step of abutting are carried out at a first area of a workstation, whereas the step of welding or splicing is carried out at a second area of said workstation, different from the first area, after execution of the step of transporting in which the stripping tool with the wires hold therein is transported from said first area to said second area.

This allows to have the above-mentioned advantages.

### BRIEF DESCRIPTION OF THE DRAWINGS

Other features, purposes and advantages of the disclosure will become more explicit from reading the detailed statement of nonrestrictive embodiments made with reference to the accompanying drawings, in which:
[fig. 1] is a simplified schematic view of an industrial robot workstation wherein embodiments of the invention can be implemented,
[fig. 2] illustrates a stripping tool according to a first embodiment and an embodiment of a robot having the stripping tool, with electric wires to be stripped,
[fig. 3] is an isometric perspective view of a first embodiment of the stripping tool of Figure 2,
[fig. 4] is an isometric perspective view of a second embodiment of the stripping tool of Figure 2,
[fig. 5] is a cross-sectional view of the stripping tool according to the first embodiment as shown in Figure 3 having a wire clamping lever in a rest position,
[fig. 6] is a cross-sectional view of the stripping tool according to the first embodiment as shown in Figure 3 having the wire clamping lever in the deflected position following complete insertion of the wire to be stripped into the stripping tool,
[fig. 7] is a low-angle, isometric rear view of the stripping tool according to the second embodiment as shown in Figure 4,
[fig. 8] is a low-angle, isometric rear view of the stripping tool according to the second embodiment as shown in Figure 4, fitted with the optional wire retaining member of the stripping tool according to an embodiment of said wire retaining member,
[fig. 9] is a low-angle, isometric rear view of the wire retaining member of Figure 8,
[fig. 10] is an isometric rear view of the wire retaining member of Figure 8 and Figure 9,
[fig. 11] is an isometric rear view of a locking tab of the wire retaining member of Figure 8 to Figure 10,
[fig. 12A] - [fig. 12D] are cross-sectional views illustrating steps of a method of stripping an electrical wire which are carried out at level of an automatic plugging machine of a wire processing workstation, where a wire to be stripped is inserted into the stripping tool according to embodiments of the method,
[fig. 12E] - [fig. 12F] are cross-sectional views illustrating steps of the method of stripping an electrical wire which are carried out at level of a welding or splicing machine of the wire processing workstation, where the wire to be stripped is removed from the stripping tool whereby stripping of the wire is obtained,
[fig. 13] illustrates a front view of the main body of the stripping tool according to another embodiment,
[fig. 14] illustrates the robot arm of the automated system in a position in which a mobile gripper portion and an aligner portion of the robot arm are closed,
[fig. 15] illustrates the robot arm of the automated system in a position in which the mobile gripper portion and the aligner portion performs positioning of a set of electric wires into a welding machine,
[fig. 16] illustrates a detailed view of the robot arm showing, more particularly, details of an embodiment of the aligner portion of the robot arm, in a situation in which said aligner portion is open,
[fig. 17] illustrates a detailed view of a specific embodiment of the wire clamping lever,
[fig. 18] illustrates a detailed view of another, specific embodiment of the aligner portion of the robot arm of the automated system, as well as a specific embodiment of the mobile gripper portion of said robot arm, and
[fig.19] is a step diagram illustrating implementations of the method of using the automated system for automatic welding or splicing of at least one electric wire.

### DETAILED DESCRIPTION

The present disclosure relates to a stripping tool for stripping electric wires, to an automated system with a robotic arm to manipulate the electric wires from the stripping tool to a welding or splicing machine, and to a method for automatic welding or splicing of electric wires using the automated system.

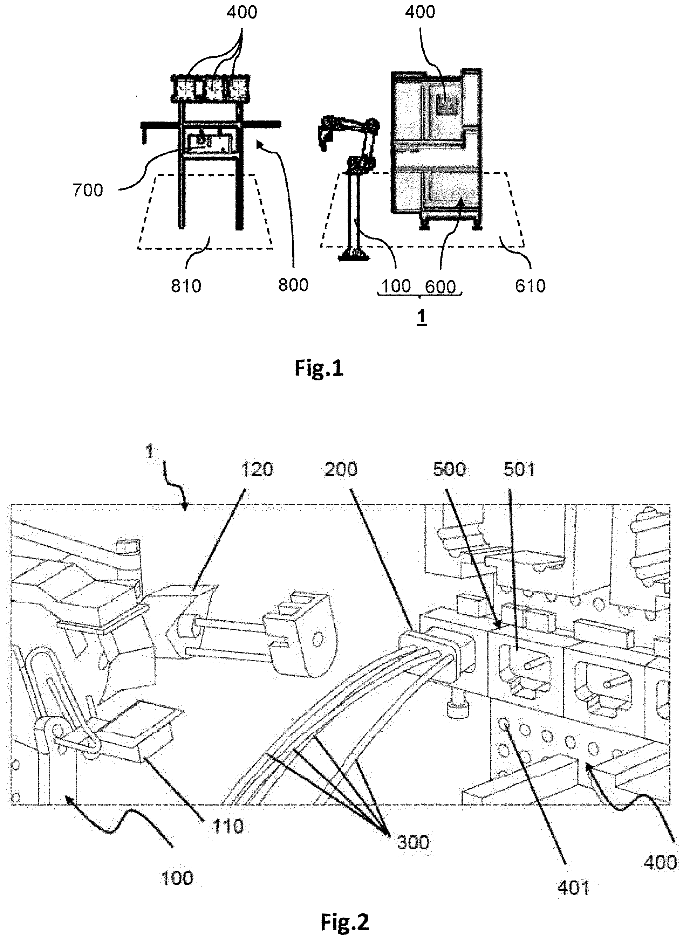

**Figure** 1 schematically shows an industrial configurable robotic workstation wherein embodiments of the invention can be implemented.

The workstation comprises an auto-plugging machine 800 adapted to carry-out automatic insertion of electrical wires into one or more wire holders (which may be seen as "dummy connectors"), which can be used to group together individual wires. The wires can have different cross-sections and are intended for the manufacture of a given wire harness. Such a wire holder constitutes a stripping tool as described herein, as will become clear from the following.

In the shown example, the 800 automatic plugging machine is located in a plugging area 810 of a wire harness assembly line. For example, the automatic plugging machine 800 can incorporate one or more operational modules from the Omega suite of process modules for feeding, pre-processing and buffering wires from the cable harnesses to be manufactured, which are available from Komax AG, a Swiss company.

The workstation further comprises a welding or splicing machine 600, located in a welding or splicing area 610, downstream of the auto-plugging machine 800 within the line of production. For example, the welding or splicing machine 600 can incorporate one or more operational modules from the Omega suite of process modules for manufacturing cable harnesses, which are available from Komax AG.

**Figure 2** illustrates a stripping tool 200 in a context of use within an embodiment of an automated system 1, with electric wires 300 to be stripped.

With further reference again to Figure 1, the automated system 1 has a movable robot arm 100, and is able to grab the electric wires 300 with a mobile gripper portion 110 (e.g. a mechanical clamp or mechanical gripper) and/or to align said electric wires 300 with an aligner portion 120 (e.g. a movable jaw). The mobile gripper portion 110 and the aligner portion 120 are mounted on the arm 100. The mobile gripper portion and the aligner portion are preferably pneumatically and/or electrically actuated.

The stripping tool 200 is arranged to receive the electric wires 300 placed therein by an operator or by the automated system 1. The stripping tool 200 is placed on a rack 500, in a receiving rack portion 501 of the rack 500. The receiving rack portion is typically called a holder or connector holder. The rack 500 is placed on a pallet 400, and could be fixed to it by fixing means (e.g. fixing screw(s) screwed in fixing hole(s) 401 of the pallet 400).

The automated system 1 may take the electric wires 300 from a storage portion, preferably positioned on the rack 500, in another receiving rack portion 501.

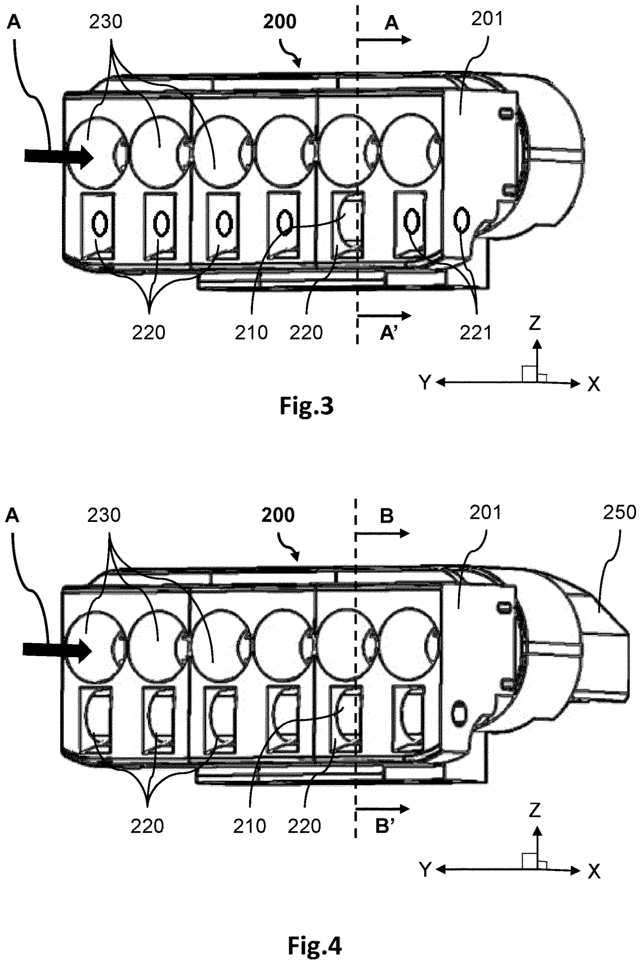

**Figure 3** shows, in an isometric perspective view, a first embodiment of the stripping tool 200 of Figure 2.

The stripping tool 200 has a main body 201 preferably formed by 3D printing and made of plastic. The main body 201 has one or more receiving portions 230 to receive one or more electric wires 300 to be stripped. Preferably, each receiving portion is adapted to receive a respective one of the wires 300. In the figure, arrow A schematically represents the direction of insertion of a wire into a receiving portion 230.

For the purpose of the description which follows, there is defined a direct three-dimensional orthogonal reference system XYZ, where X- and Y-axes form a horizontal plane XY, and where the X- and Z-axis form a vertical plane XY perpendicular to said horizontal plane XY.

The expression "three-dimensional space" (or 3D) characterizes the space surrounding the user, as perceived by his vision, in terms of width, depth and height. In mathematics, this notion corresponds to Euclidean geometry in space, according to which space is marked by three orthogonal axes, whereas a plane is made up of only two dimensions (2D) and is marked by only two of said three orthogonal axes. The three geometric dimensions thus are:
- length along the longitudinal X-axis, oriented by way of convention from the front to the rear;
- width along the transversal Y-axis; and,
- height along the vertical Z-axis, oriented by way of convention from the bottom to the top.

In addition, and unless explicitly stated otherwise, the terms and expressions in quotation marks below (and all derived terms, as well as semantically equivalent expressions) are used in the present disclosure according to the following convention:
- "rear" and "front", "behind" and "ahead", "backside" and "frontside", "backward" and "forward", and derivatives such as "in (the) front of", an "in the rear of" as well as associated verbs and derived nouns or expressions, are used in reference to the direction of the longitudinal axis X, which shall always correspond to the direction of insertion of an electrical wire into the main body 201 through the receiving portion 230 as illustrated by the arrow A in Figure 3, and which is oriented from the front to the rear on the figures of the drawings;
- "left", "right", "side" or "lateral", are used in reference to the direction of the transversal axis Y; and,
- "bottom" and "top", "below" and "above", "under" and "over", the verbs "to decline" and "to rise" and any derivatives, synonyms or equivalents, as well as the terms "superior" and "inferior", as well as associated verbs and derived nouns or expressions, are used in reference to the direction of the vertical axis Z, which is oriented from the bottom to the top on the figures of the drawings.

For the sake of clarity, axes X, Y and/or Z of the above reference system XYZ are represented by respective arrows on the figures of the drawings, where appropriate.

In the shown example, main body 201 of the stripping tool 200 comprises six receiving portions 230, adjacent to each other along the transversal direction of axis Y. This number and arrangement are only an example. More receiving portions, e.g. seven receiving portions, or less receiving portions, can be provided. Further, the receiving portions can be arranged other than in a horizontal line as shown in Figure 3, For instance, a plurality of receiving portions may be arranged in a matrix of rows and columns, with or without an horizontal shift with respect to the direction of the transversal axis Y.

The main body 201 further has slots 220, which are respectively associated to each one of the receiving portions 230. In embodiments as shown herein, any one of slots 220 is arranged under a respective one of the wire receiving portions 230.

Clamping levers such as lever 210 shown in Figure 3, can be arranged in each of one of the receiving portions 230, respectively. The technical function achieved by these levers 210 is to clamp or pinch a wire after it has been introduced forcibly, that is with some force in an operative position within the corresponding receiving portion 230. To that end, each receiving portion 230 is in inner communication with its associated slot 220, so that at least the rear end of the corresponding lever 210 can contact and press the wire upwardly within said receiving portion against upper walls of the receiving portions 230. The terms "operative position" with respect to electrical wire(s) mean, in the context of the present description, a position ready from stripping. In Figure 3, only one clamping lever 210 is shown, namely in the second slot 220 from the right side of the figure.

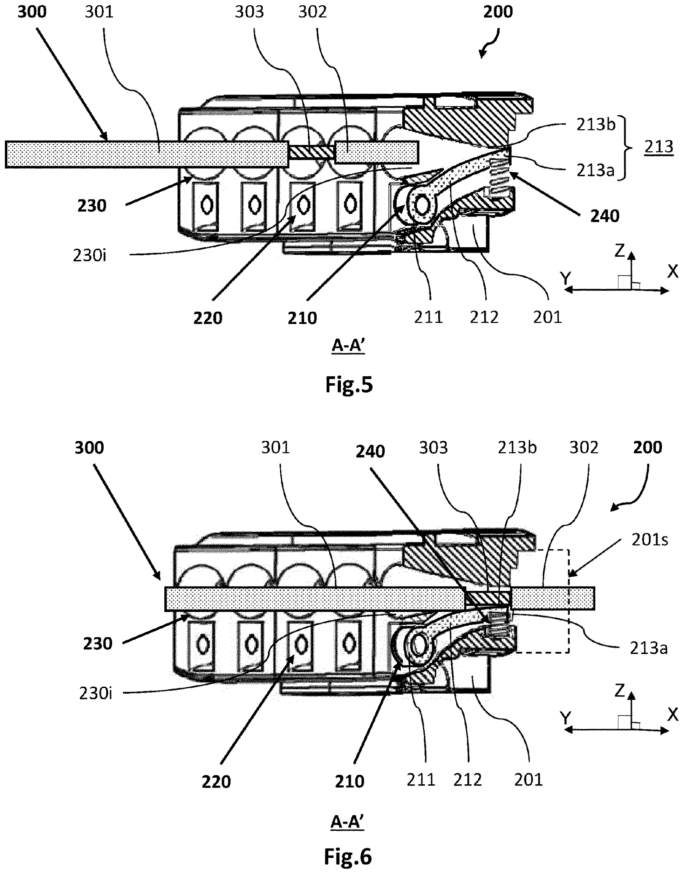

As will become more apparent from the below description of cross-sectional views in Figure 5 and Figure 6, a clamping lever 210 has a pivot portion 211 (see Figure 5 and Figure 6), by which it can rotate with respect to the body 201 by means of a lever shaft. With reference more specifically to the first slot 220 from the right side of Figure 3, there is shown two holes 221 in the respective vertically extending side walls of said slot 220. Said holes 221 mutually face each other along the transversal axis Y. The are configured to cooperate with two pivot pins of the pivot portion 211 of the clamping lever 210. More precisely, holes 221 in sidewalls of slots 220 are adapted to accommodate the pivot pins of the clamping lever 210. They can be through-holes as shown, or blind holes.

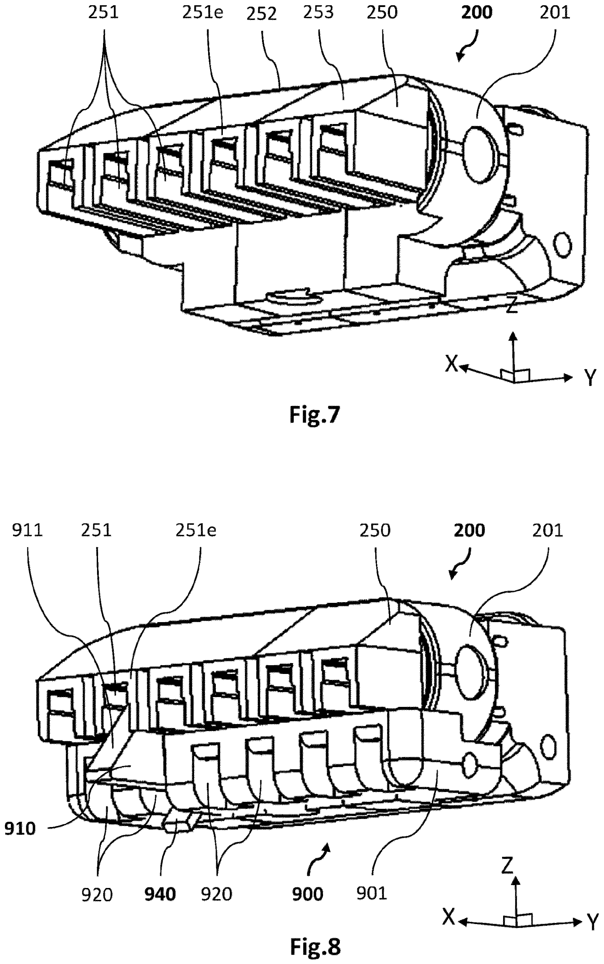

**Figure 4** shows, in an isometric perspective view, a second embodiment of the stripping tool of Figure 2. Compared to the first embodiment as shown in Figure 3, the main body 201 of this second embodiment further comprise a wire guiding portion 250 disposed in the rear side of said body 201 (that is, behind said main body 201 along the longitudinal axis X, with respect to the direction of insertion of the wires). This wire guiding portion 250 in in continuity with longitudinally extending through holes in the receiving portions 230. More details of the wire guiding portion 250 will become more apparent from the below description of Figure 7.

The wire clamping lever 210 further has a guiding portion 212 and an abutting tab portion 213. The stripping tool 200 further has an elastic member 240 (e.g. a coil spring or a spiral spring) arranged to apply a return force on the lever 210 between a deflected position and a rest position, that-is-to-say the elastic member 240 forces the lever 210 in the rest position. The elastic member 240 is represented in Figures 5 and 6 between the body 201 and the lever 210 away from the articulated portion 211 (e.g. at the level of the abutting tab portion 213). In the shown example, the elastic member 240 is a spring for instance, preferably an helical spring applying the return force onto the clamping lever 210, and more preferably an helical compression spring. In a variant, it could be a helical extension spring. The skilled person will appreciate that the elastic member 240 could also be a spiral spring arranged on the pivot portion211, applying a rotating torque at said pivot portion. The wire clamping lever 210 is housed by the body 201 in slot 220, that-is-to-say the lever 210 is preferably mounted inside the body 201 of the stripping tool 200. The body 201 may have as many slots 220 and levers 210 as receiving portions 230. The slots 220 are preferably arranged under the receiving portions 230 as shown in Figure 3 and may each house one clamping lever such as lever 210 as shown. The abutting tab portion 213 of the wire clamping lever 210 has a distal end abutting portion 213a and a pinching abutting portion 213b. As it will be explained with more details below, the distal end abutting portion 213a of the abutting tab portion 213 will be of help when the electric wires 300 are of pre-stripped type, while the pinching abutting portion 213b of the abutting tab portion 213 will be of help when the electric wires 300 are not pre-stripped.

The electric wires 300 each have an electric conductor therein covered by an insulating sheath. The electric wires 300 may have multiple (conductive) strands therein or a monolithic electric conductor, both generally in copper, or any other conductive material. The insultation or sheath could be in an insulative material, such as plastic or PVC. The electric wires 300 preferably each have a main portion 301 which is insulated, an end portion 302 with an insulation and a (pre) stripped portion 303 between the main portion 301 and the end portion 302. The end portion 302 is not fully pre-stripped to facilitate the insertion in the receiving portion 230, that-is-to-say it is just partially stripped. Further, it is very useful to strip the end portion 302 just before use for welding or splicing, particularly when the electric wires 300 have multiple strands therein, which may spread in various directions (and could be difficult to transport or store).

It is to be noted that the receiving portion 230 is preferably conical in shape to further facilitate the insertion of the electric wire 300, the diameter of the opening being preferably 5.5 mm on the insertion side 230i, 3.65 mm on the opposite side 230o, the length of the cone being 5.5 mm, and the distance between the centerline of adjacent receiving portions 230 being preferably 5.6 mm so as to ensure a high rate of successful automatic insertion of the electric wires 300 in the receiving portions 230. These values are of particular interest for electrical wires having a cross-section between 0.13 mm and 2.5 mm².

**Figure 5** is a cross-sectional view in the A-A' plane of Figure 3, i.e. an XY plane containing the longitudinal axis of slot 220 which, in said Figure 3, contains a first lever 210. Figure 5 shows the stripping tool 200 with said lever 210 in a rest position. An electric wire 300 is shown partly inserted into the associated receiving portion 230, in a position along the longitudinal axis in which the end portion 302 of wire 300 engages the insertion side 230i of said receiving portion 230, without contacting the lever 210.

**Figure 6** illustrates the stripping tool 200 in the same cross-sectional view as Figure 5, but in a configuration in which the lever 210 is in a fully deflected position.

In contrast with Figure 5, indeed, in Figure 6 the electric wire 300 is fully inserted in the receiving portion 230 of the main body 201 of the stripping tool 200, preferably up to, or close to, an optional stop portion 201s of said main body 201.

The electric wire 300 has been guided by the guiding portion 212 of the lever 210 up to the full insertion of the electric wire 300 in the stripping tool 200. That is to say, the end portion 302 of the electric wire 300 is fully inserted in the stripping tool 200, until the abutting portion 213 contacts the end portion 302, and preferably until the distal end abutting portion 213a contacts the pre-stripped portion 303.

In the configuration as shown in Figure 6, the end portion 302 of the wire 300 is in abutment with the abutting portion 213 (more particularly with the distal end abutting portion 213a). The pinching abutting portion 213b may be in contact with the pre-stripped portion 303.

When the operator or the robot arm 100 removes the electric wires 300 from the receiving portion 230 by pulling them backward along the longitudinal axis X, the abutting portion 213, in particular the distal end abutting portion 213a, will apply a stripping effort on the insulation of the end portion 302 and will remove the insulation or sheath from the end portion 302, so as to form a stripped end portion 304. As previously mentioned, this step takes place after the stripping tool 200, containing the pre-stripped wires 300 hold therein, has been transported from the plugging area 810 to the welding or splicing area 610 by the operator or the robotic arm 100, by another robotic arm, or by any other automated device (e.g. a device comprising a fully automatic conveyor).

The electric wire 300 is now ready for welding or splicing and must be positioned close to or in front of the welding machine (preferably an ultrasonic welding machine using vibrations) or the splicing machine, by the operator or the robotic arm 100.

It is to be noted that, in case the wire 300 is not pre-stripped, the abutting portion 213 of the first lever 210, in particular the pinching abutting portion 213b will apply a stripping effort on the sheath when the electric wire 300 is removed from the receiving portion 230, and an end portion of the sheath will be removed from the end portion 302 of the electric wire 300, so as to form the stripped end portion 304 of the electric wire 300.

The body 201 may further have the optional stop portion 201s or final abutment portion to limit the full insertion of the electric wire 300 as necessary.

**Figure 7** shows, in a low-angle, isometric rear view, the stripping tool 200 according to the second embodiment as shown in Figure 4.

The wire guiding portion 250 has alignment channels 251, each of which being arranged as a respective longitudinal extension (or rear extension) of one of the forwardly extending through holes which are provided in the receiving portions 230 of body 201 for the insertion of the wires 300. Stated otherwise, the guiding channels 251 further extend along the longitudinal axis X, from the front to the rear, from the rear side 230o of the receiving portions 230 which is opposite to the insertion side 230i of said receiving portions 230. The guiding channels 250 are adapted to accommodate the respective end portions 203 of the wires to be stripped, ordered and spaced from each other along the transversal axis Y.

In preferred embodiments, the guiding channels 251 have an inverted U-shaped cross-section. The channels 251 are thus open at the bottom. Advantageously, this allows insulation jackets to fall, under the action of gravity, when they are separated from the wire end portions 302 as these wires are pulled frontwards (from the rear to the front) to be removed out of the stripping tool 200, through the insertion side 230i of the receiving portions 230. This will be described in more details below.

Preferably, the wire guiding portion of the stripping tool 200 is formed integrally with the main core 201 of the stripping tool 200. In a variant, it can be designed as a separate member.

With reference now to the low-angle, isometric rear view of **Figure 8****,** the stripping tool 200 according to the second embodiment can further comprise a wire retaining member 900. Figure 8 illustrates the stripping tool as shown in Figure 4, fitted with the optional wire retaining member 900 of the stripping tool 200, according to one embodiment of said wire retaining member 900.

For ease of assembly, the wire retaining member 900 is preferably dissociated from the main core 201 of the stripping tool 200, and can be attached to said main core 201, preferably below the wire guiding portion 250, for instance by conventional latching means (not shown).

In some embodiments, the wire retaining member 900 comprises:
- a core 901,
- longitudinally extending slots 920 formed in the core 901,
- locking tabs 910 movably mounted each one in a respective one of slots 920, and adapted to be moved from a wire lock position to a wire release position, and vice versa, and
- an elastic member 940, for example a torsion spring, adapted to apply a return force to the locking tab 910, to place said tab in a rest position in the absence of any contrary action.

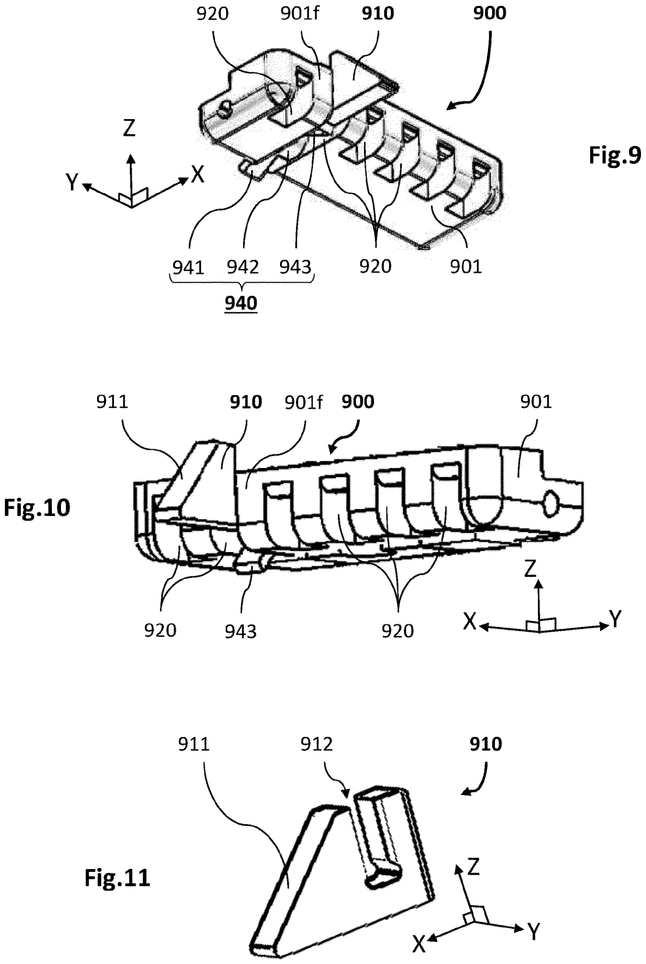

**Figure 9** shows, in a low-angle, isometric rear view, the wire retaining member of Figure 8 alone. **Figure 10** similarly shows, in an isometric rear view, the wire retaining member 900 of Figure 8 and Figure 9. In order not to overload these drawings and therefore to preserve their clarity, only a single locking tab of the wire retaining member 900 is shown, operatively positioned in the second slot 920 from the left in the figures. It goes without saying, however, that the wire retaining member 900 shall house more locking tabs, preferably as many as there are guiding channels.

**Figure 11** shows, in an isometric rear view, a locking tab 910 of the wire retaining member 900 of Figure 8 to Figure 10, viewed separately. In the exemplary embodiment as shown, the locking tab 910 comprises a downward sloping front surface 911 and a vertically extending rear surface 913.

Preferably, the width (along the transversal direction of axis Y) of the locking tab 910, substantially equals, by inferior values, the width of the slot 920. Thus, the locking tab 910 fits the width of said slot. This reduces unwanted lateral movements of the locking tab 910 caused by mechanical assembly clearances.

Advantageously, the locking tab 910 further comprises a vertically extending notch 912, adapted to guide up and down displacements of said tab along the vertical axis Z only. To that end, the locking tab 910 is mounted within the wire retaining member 900 with notch 912 coming in engagement with the upper portion of the front surface 901f of said wire retaining member 900.

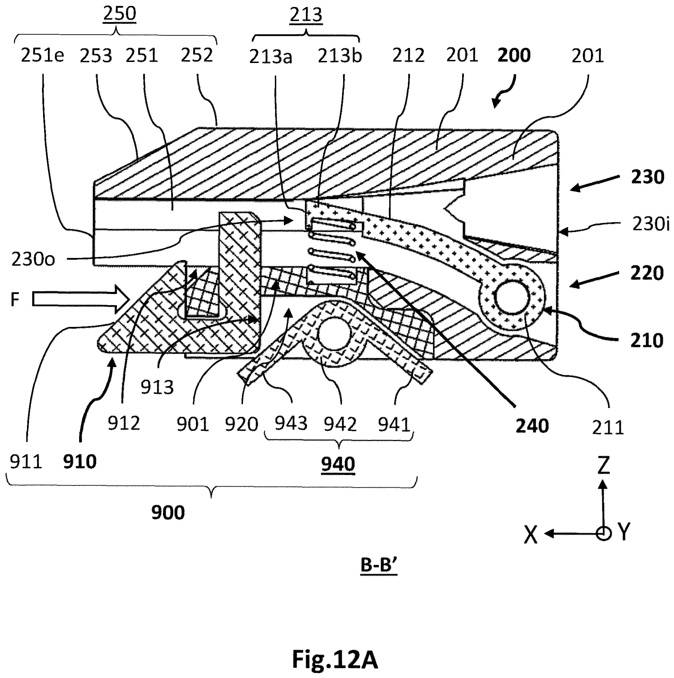

With further reference to the cross-sectional view of **Figure 12A**, in some embodiments the locking tabs 910 can be moved down from an upper wire lock position to a lower wire release position, under the pressure of an external wire unlocking activation finger onto the tabs 910. In embodiments as illustrated in the figure by a white arrow in the left of the figure, the force F so exerted by the external wire unlocking activation finger onto the tab 910 as shown, is applied horizontally along the longitudinal direction of axis X, rearwards, that is from the front to the rear. The vertical displacement of the locking tab 910 downwards, is caused by mechanical reaction of the downward sloping front surface 911, in response to horizontal rearwards force F. In a preferred embodiment, all locking tabs 910 are pressed down by one and the same external wire unlocking activation finger.

Conversely, the locking tabs 910 can be moved up from the lower wire release position to the upper wire lock position under the action of an elastic, namely a resilient return member, e.g. a torsion spring, in the absence of any contrary action such as the above-mentioned force F.

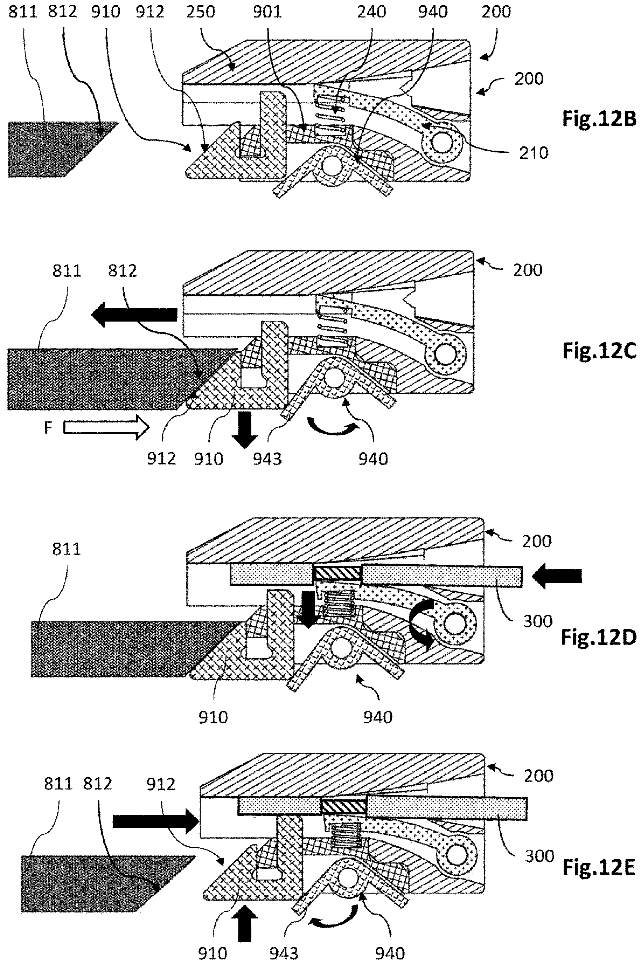

During the up and down displacements of the locking tab 910, the vertically extending rear surface 913 of said locking tab slides along the body 901 of the wire retaining member 900, which helps vertical guiding and further reduces unwanted displacement of the tab 910 along the longitudinal direction of axis X. The vertical displacements of the locking tab 910 from the upper wire lock position to the lower wire release position, and vice versa, will become more apparent from the below description of Figures 12B to 12G.

In one example considered herein and illustrated in the drawings, the torsion spring 940 can have a single coil 942, consisting e.g. of a wounded blade with two straight end legs 941 and 943 at a particular angle. The blade can be in any suitable resilient material such as a stainless steel, alloy steel, hard alloy, non-ferrous alloy, etc. Preferably, the width (along the transversal direction of axis Y) of the torsion spring 940 substantially equals the width of the locking tab 910, and thus fits the width of the slot 920. This reduces unwanted lateral movements of the spring 940 along the transversal direction of axis Y which may be caused by mechanical assembly clearances.

In the shown example, the torsion spring 940 is a compression spring with tangential legs 941 and 943 having straight ends of same length, at an angle of ca. 100° to each other. The rear leg 941 is blocked against a downward sloping rear surface of the slot 920, whereas the front leg 943 abuts the rear bottom corner of the locking tab 910 to exert the elastic return force thereto. Given the guiding features provided for vertically guiding displacements of the locking tab 910, this elastic return force tends to push the tab 910 upwardly.

This example is purely indicative. The one with ordinary skills in the art will further appreciate that technical specifications of the spring 940 depend on design considerations within the context of the specific application. In particular, the wire diameter, the direction of coiling (right hand or left hand coiling), the number of coils, the length of the end legs, the geometry of how either legs are bent (namely axial, tangential or radial), and the positional relationship of the two legs to each other (inline or at any particular angle), their operating deflection range, the shape of the respective ends of the legs (e.g., straight, hooked, hinged, etc.), depend on operational and installation requirements in any specific application.

In other embodiments, the torsion spring can be an extension spring.

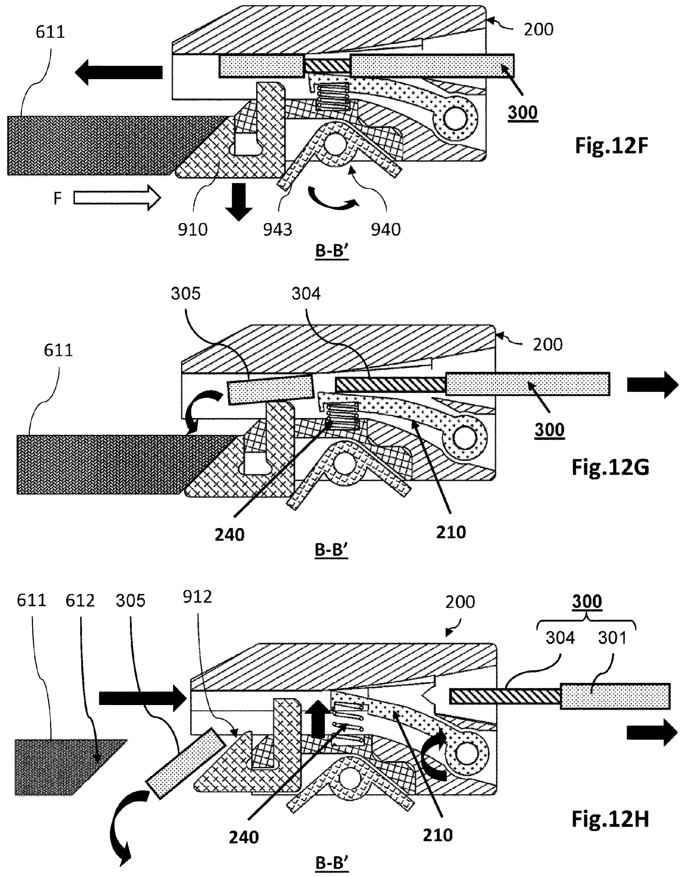

The operation of the locking tab 910 of the wire retaining member will now be further described with reference to the cross-sectional views of **Figure 12B** to **Figure 12G****.** More specifically, Figures 12B-12E illustrate steps of a method of stripping an electrical wire that are carried out at the automatic plugging machine 800 of a wire processing workstation, where a wire 300 to be stripped is inserted into the stripping tool 200 according to embodiments of the method. Figures 12F-12H illustrate steps of the stripping method that are carried out at the welding or splicing machine 600 of the wire processing workstation, where the wire 300 to be stripped is withdrawn from the stripping tool 200 thereby stripping it according to embodiments of the method.

The skilled person will appreciate that the proposed design for the wire retaining member 900 (secondary lock) of the stripping tool 200, in combination with the wire guiding portion 250 of the stripping tool 200, allowing automatic stripping of wires having different cross-sections, e.g., ranging from 0,13 mm2 to 2,5 mm2, with one and the same striping tool.

In what follows, we will focus more particularly on the description of the operation of the wire retaining member 900 (so-called secondary lock) of the stripping tool 200, since the operation of the wire clamping lever 210 (so-called primary lock) was already described in detail with reference, in particular, to Figures 5 and 6. The skilled person will understand, however, that both lock mechanisms operates jointly in response to the insertion and later withdrawal of the to-be-stripped wire in, respectively from the stripping tool 200.

In Figure 12B to Figure 12G translational and pivoting movements of any moving element are represented schematically by black arrows.

In **Figure 12B**, the stripping tool is in the operational state as shown in Figure 12A. In this state, the clamping lever 210 and the locking tab are in their respective rest positions. Figure 12B illustrates the step of the method wherein the stripping tool 200 is brought to the auto-plugging machine 800, more specifically in front of a wire release activation finger 810 thereof.

With reference to **Figure 12C**, the downward sloping front surface 911 of the locking tab 910 of wire retaining member 900 contacts the wire release activation finger 810 at the auto-plugging machine 800 due to horizontal frontward displacement of the tool 200, either manually performed by an operator or automatically performed by a robot arm. In preferred embodiments, the rear surface of the wire release activation finger 810 has a rearwardly rising slope, which matches the downward sloping front surface 911 of the locking tab 910 of the stripping tool. Stated otherwise, the wire release activation finger 810 has a upward sloping rear surface 811 adapted to slidably contact the downward sloping front surface 911 of the locking tab 910 to generate horizontal force F represented schematically by the white arrow, applied from the front to the rear against said downward sloping front surface 911 of the locking tab 910. As a result, the locking tab 910 moves down, against the force of the elastic member 940 whose front leg 943 pivots rearwardly, thus releasing the wire retaining lock (secondary lock). That way, the wire guiding channels 251 of the wire guiding portion 250 are freed, allowing insertion of a wire to be stripped.

**Figure 12D** illustrates the step of inserting the to-be-stripped wire 300 in the stripping tool 200. This step has been described above with reference to Figures 5 and 6. This description shall not be repeated here.

With reference to **Figure 12E**, the stripping tool is then removed from the pallet at the auto-plugging machine 800 for manual or automatic transportation to the welding or splicing machine 600. Contact between the rear surface of the wire release activation finger 810 and the front surface of the locking tab 910 of the wire retaining arrangement is then lost. As a result, the locking tab 910 moves up, under action of the return force exerted by the elastic member 940, whose front leg 943 pivots frontwards. Thus the wire retaining lock (secondary lock) gets closed. That way, the wire 300 to be stripped is firmly secured in the guiding channel 251 of the wire guiding portion 250.

Hence, a set of different wires 300 are securely hold in position during transportation of the stripping tool to the welding or splicing machine 600. In particular, the order and spacing of the wires, which arranged within the guiding channels 251 lateral to each other along the transversal axis Y, is maintained. Same for their relative positions along the longitudinal axis X, and their relative alignment along the vertical axis Z. Advantageously, position of the set of wires which are hold in the stripping tool 200 during transport thereof to the welding or splicing machine 600, is independent of the respective cross-sections of said wires.

**Figure 12F** shows the stripping tool 200 positioned in front of the welding or splicing machine 600. More specifically, in the configuration as shown, the rear surface 913 of the locking tab 910 of the stripping tool 200 contacts a wire release activation finger 610 of said machine 600.

Because of the stripping tool 200 moving frontward into the direction of the wire release activation finger 610, the downward sloping front surface 911 of the locking tab 910 of wire retaining member 900 reacts to contact forces exerted by said finger 610, and slides down vertical, against the elastic force of the coil spring 940. This process has already been described above with reference to Figure 2C, and this description shall not be repeated here. The person skilled in the art will note that the wire release activation finger 610 at the welding or splicing machine 600 has an upward sloping rear surface 612, like the upward sloping rear surface 812 of the wire release activation finger 810 of the auplugging machine 800.

Thanks to the above step, releasing of wire 300 which is present in the wire guiding channels 251 of the wire guiding portion 250 is obtained. This makes it possible to remove said wire from the stripping tool, and thus to strip the wire.

The beginning of the removal of wire 300 from the stripping tool is illustrated in **Figure 12G****.** When the wire 300 is pulled out from the front to the rear, which is preferably performed by the robot arm 100 of the automated system 1, an insulation jacket 305 is removed by stripping of the end portion of the electric wire 300 and falls by the action of gravity. Figure 12G shows the stripped end portion 304 of the wire after stripping.

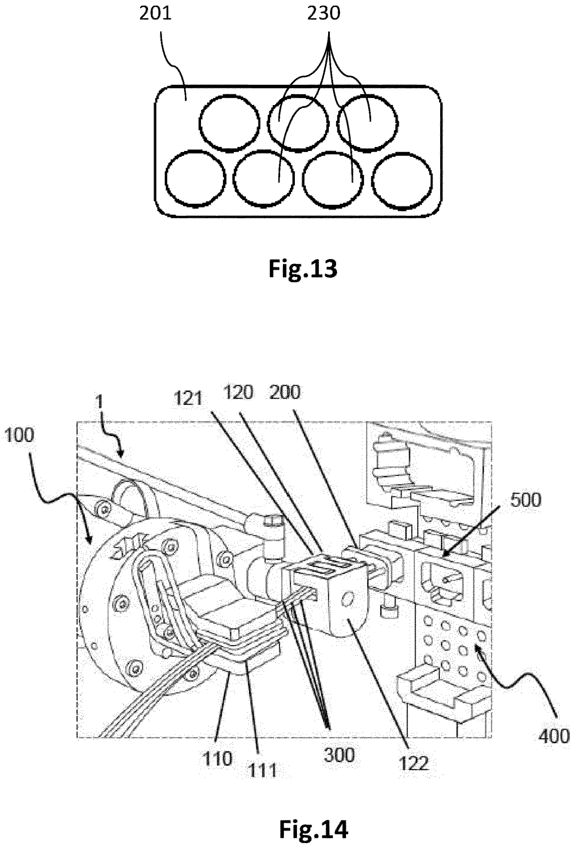

In the final step of the method of stripping wires according to embodiments, as illustrated in **Figure 12H**, the clamping lever 210 becomes fully released following the complete removal of wire 300 from the stripping tool 200. While said tool 200 is further moved in the rear direction as shown, contact between the rear surface 612 of the wire release activation finger 611 of the welding or splicing machine 600 and the front surface of the locking tab 910 is lost. Consequently, the stripping tool returns to the original configuration as shown in Figure 13B (see above), the description of which shall not be repeated here. In this configuration, both the clamping lever 210 and the locking tab 910 are in their respective rest positions.

In preferred embodiments, the backward extraction of the stripping tool 200 from the pallet at the welding or splicing machine 600 occurs briefly after removal of the wires 300 from the stripping tools 200 and thus briefly after stripping of the wires, so that insulation jackets 305 separated from the wires fall in a basket, namely a scrap or waste collector (not shown).

In some embodiments, a plurality of identical or similar stripping tool can be stacked one above the other at the welding or splicing machine 600.

The angle to the horizontal, provided in the upper left corner of the top surface 252 of the wire guide portion 250, which can be between about 30 degrees and about 45 degrees, preferably equal to about 40 degrees as illustrated, is intended to allow pieces of insulating sheathing falling down from any other stripping tool stacked above the stripping tool 200 as shown, to fall advantageously down into the same scrap or waste collector.

**Figure 13** illustrates a front view of a body 201 of the stripping tool 200.

The stripping tool 200 may have for example seven receiving portions 230 arranged in two or more rows.

**Figure 14** illustrates the robot arm 100 in a position wherein the mobile gripper portion 110 and the aligner portion 120 are closed on the electric wires 300, while said electric wires are still plugged within stripping tool 20 placed on the rack 500, the latter being placed on the pallet 400, as shown.

The electric wires 300 are pinched by the aligner portion 120, to keep the alignment of the electric wires 300. The aligner portion 120 is preferably a jaw with at least one moving part 122 separated from a fixed part 121 by one or more columns (compare figure 1 wherein the aligner portion 120 is open with figure 5 wherein the aligner portion 120 is closed).

The mobile gripper portion 110 firmly grabs the electric wires 300 to remove the electric wires 300 from the stripping tool 200 by pulling them out of the receiving portions 230. As the stripping effort may be important, the mobile gripper portion 110 may be equipped with friction pads 111 (e.g. in elastomer).

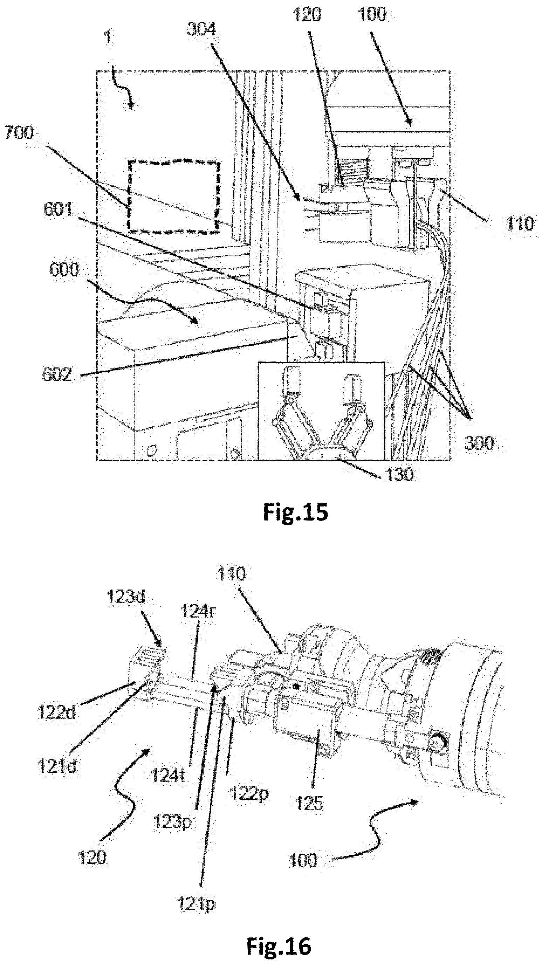

**Figure 15** illustrates the robot arm 100 in a position in which the mobile gripper portion 110 and the aligner portion 120 of said robot arm 100 do position the electric wires 300 close to a welding or splicing machine 600.

The stripped end portion 304 of the electric wires 300 are visible in figure 6. They are oriented by the aligner portion 120. They could be parallel to each other or with a small angle (e.g. 10 degrees or more, 20 degrees or more, 30 degrees or more) according to the need and the welding or splicing conditions (or specifications).

Compared to Figure 14, in Figure 15 the movable robot arm 100 has moved the electric wires 300 to the welding or splicing machine 600. And it has rotated so as to place the stripped end portion 304 of said wires in a vertical alignment, which is of interest in particular when the welding machine 600 is an ultrasonic welding (USW) machine.

The ultrasonic welding machine 600 may have a first component 601 opposed to a second component 602, to act on the electric wires 300 and weld (or splice) them together in a known manner. These are typically static parts that do not vibrate. The vibrating part is the so called sonotrode and it is located at the bottom of the welding area or splicing area. Once wires are placed in the welding position, the first component 601 moves forward and presses the wires 300 down in the direction of the sonotrode. Once wires 300 are pressed with pre-set pressure value (programmed on the ultrasonic welding machine), the sonotrode (bottom part) starts vibrating and thus welding is performed.

Single-sided or double-sided loading of stripped wire terminals make it possible to provide a butt welding from one side or to provide a dual end (in line) welding from two sides, respectively. In the latter case, the electric wires 300 have to be grabbed by a fixed gripper portion 130 in front of (namely at) the welding machine 600, and the robot arm 100 has to move back to collect other electric wires 300 (and repeat steps to obtain said other stripped electric wires 300 from another stripping tool 200) and move them to the other side (opposite side) of the welding machine 600 or splicing machine. Then, the dual end welding or splicing is possible.

The automated system 1 may further have a general unit 700 having a control unit, a processing unit, and/or a positioning unit for positioning the robotic arm 100, the aligner portion 120 and/or the mobile gripper portion 110 of the mobile gripper of said arm. The general unit 700 can be configured to command the gripper portion 110 and the aligner portion 120 of the mobile gripper of the robot arm 100, the robotic arm 100 itself, the fixed gripper 13 arranged at the welding machine 600, the welding machine 600 itself, and any other listed or non-listed components of the automated system 1. The general unit 700 can further comprise a mapping unit for storing or receiving the position of the stripping tool(s) 200, and in particular of the one or more receiving portions 230 of said stripping tool(s).

The automated system 1 can further comprise a detection unit configured to detect the one or more receiving portions 230, the one or more electric wires 300, or any other object. The general unit 700 may comprise a power storage or a general electric supply connection.

**Figure 16** shows a detailed view of the robot arm 100 of the automated system 1.

The arm 100 is equipped with the gripper portion 110 and the aligner portion 120 as mentioned above. The aligner portion 120 is represented in an open position.

The aligner portion 120 has preferably the following components: a translatable column 124t for linking a proximal portion 122p of a jaw with a distal portion 122d of the jaw and allowing the distal portion 122d to move back and forth towards the proximal portion 122p; and/or a rotatable column 124r to allow rotation of the proximal portion 122p and distal portion 122d.

The aligner portion 120 may further have a proximal lock portion 121p to be connected and locked with a distal lock portion 121d, the lock portion being preferably a protrusion and a corresponding recess, e.g. of triangle shape.

The aligner portion 120 may further have a proximal pinching portion 123p and a distal pinching portion 123d arranged to pinch the electric wires 300 presented therebetween. The pinching portions 123p, 123d are preferably of corresponding shapes, e.g. of triangle shape, to ensure a correct alignment of the electric wires 300 therebetween.

The aligner portion 120 may further have a servomotor 125 to command the movement of the above-mentioned components of the aligner portion 120. It is to be noted that the gripper portion 110 may also have a servomotor for the same aim.

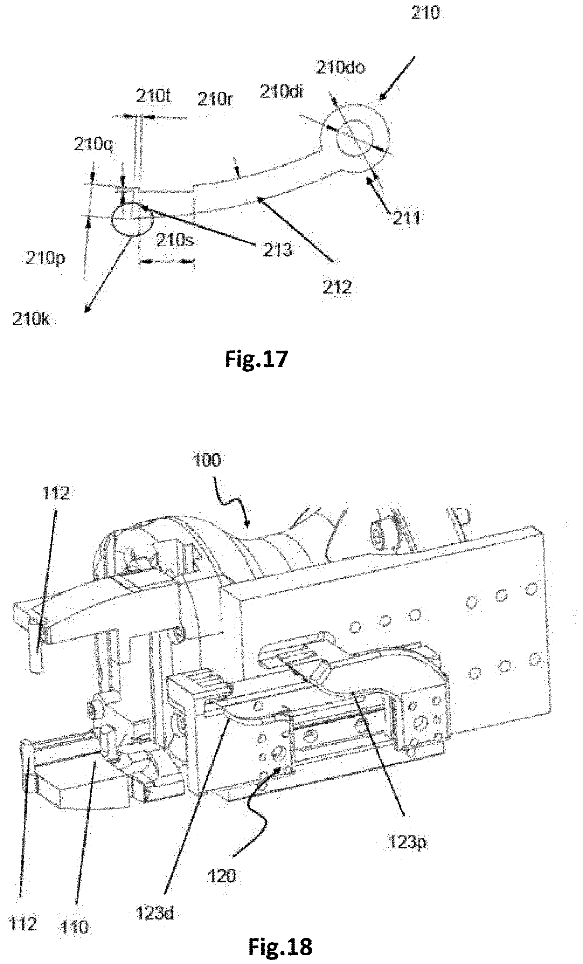

**Figure 17** illustrates a detailed view of a specific embodiment of the lever 210, for which improved results are achieved, particularly for wires having a cross-section ranging from 0.13 mm² to 2.5 mm².

The lever 210 has the abutting tab portion 213, the articulated portion 211 and the guiding portion 212 as mentioned above. The articulated portion 211 may have an outside or external diameter 210do of 4mm, and an inner or internal diameter 210di of 2.1 mm. The guiding portion 212 may be curved or bended and preferably has a curved radius 210r of 23.27 mm. The tab portion 213 may be equipped with a recess 210s and a projection 210t, 210q to facilitate the stripping. Typical values for the recess length are 3.1 mm, 0.2 mm high for the projection (210q) and 0.33 mm long for the projection (210t). The abutting portion 213 is typically 1.86 mm high (210p). The edge 210k of the abutting portion 213 is preferably rounded with small radius such as e.g. 0.1 mm or 0.05 mm and may be equipped with a spout or a beak to avoid any scratching during stripping. Smoothing or chamfering the edge 210k with very small radius or with the spout prevents scratching or pulling of the wire conductor.

**Figure 18** shows a detailed view of a specific embodiment of the aligner portion 120 of the mobile gripper of the robotic arm 100.

The aligner portion 120 may further have the proximal pinching portion 123p and the distal pinching portion 123d arranged to pinch the electric wires 300 presented therebetween, as mentioned above. The pinching portions 123p, 123d are preferably of corresponding shapes, e.g. of rounded and curved shape, to ensure a correct alignment of the electric wires 300 therebetween.

Once the proximal pinching portion 123p and the distal pinching portion 123d are closed, the alignment of the electrical wires 300 is ensured and preferably results in the wires 300 being arranged adjacent one another in a line (rather than bunched into a triangle shape or some other partially stacked arrangement).

Further, in the example illustrated in Figure 18, the aligner portion 120 can be actuated by a double movement pneumatic actuator that can move both sides of the aligner portion 120 at same time.

Finally, one or more locking teeth 112 may be provided on the mobile gripper portion 110 to ensure that wires 300 do not slip outside of the gripper 110. The same may apply to the fixed gripper 130 of Figure 15.

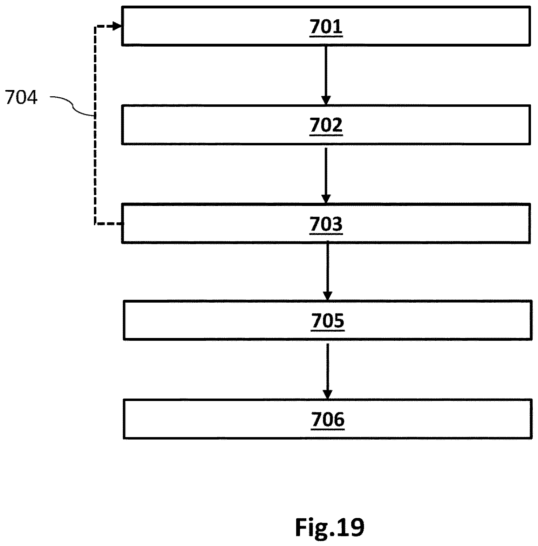

A method using the automated system described above for automatic welding or splicing of at least one electric wire is illustrated by the step diagram of **Figure 19****.** The method is applicable to wires having an electric conductor covered by an insulating sheath and an end portion 302 thereof, wherein the electric conductor has strands or monolithic electric element.

The method comprises the following steps for stripping one or more wires:
701: inserting the end portion 302 of the electric wire 300 into the receiving portion 230 of a stripping tool 200,
702: abutting the end portion 302 of the electric wire on the abutting tab portion 213 of the wire clamping lever 210 of the stripping tool, and,
703: removing the electric wire from the receiving portion of the stripping tool so as to strip the electric wire.

According to embodiments, steps 701 and 702 are carried out at a first area of the industrial workstation, for instance at the auto-plugging area 810. In some embodiments, steps 701 and 702 are carried out while the stripping tool is in the auto-plugging machine 800.

Step 703, in contrast, is carried out at a second area of the industrial workstation, different from the first area, for instance at the welding or splicing area 610. In embodiments, step 703 is carried out while the stripping tool 200 is in the welding or splicing machine 600.

Indeed, the method comprises a step 705 of transporting the one or more wires to the welding or splicing machine 600 so that stripped end portions thereof be welded or spliced by said machine 600. Transportation of the wires is performed while said wires are still not stripped yet, and still contained and hold within the stripping tool 200. Stated otherwise, individual wires of possible different types (including different cross-sections as the case may be) have been gathered at the auto-plugging machine and individually plugged into respective receiving portions 230 of the stripping tool 200, as was described in what precedes, in the correct order if applicable, depending on the specifications of the cable harness being made. However, it is only after transportation of the stripping tool 200 from the auto-plugging machine to the welding or splicing machine 600, that step 703 is carried out. This is performed for a set of wires all together, by pulling said wires from one stripping tool in a single step, using the robot arm 100.

The method further comprises a step 706 of welding or splicing strands of the one or more electric wires, using the welding or splicing machine 600. Advantageously, the method allows welding or splicing strands or monolithic electric elements of at least two electric wires without losing their orderly arrangement, alignment, and mutual positioning from the time they are removed from the stripping tool until they are welded or spliced. Indeed, one and the same robot arm both the strips the wires by removing them from the stripping tool 200, and presents them to the welding or splicing machine 600 for simultaneous welding or splicing thereof.

Optionally, the method includes a repetition 704 of steps 701 to 703 for another electric wire or another set of wires, on a per stripping tool basis. Stated otherwise, the step of inserting 701, the step of abutting 702 are repeated for another electric wire or another set of wires, and/or and the step of welding 703 is repeated on a per stripping tool basis, that is welding or splicing one or more wires removed from another stripping tool. In the step diagram of Figure 19, optionally repeating steps 701 to 703 is schematically represented by a connecting arrow 704 in dotted line. Advantageously, each time the robot arm removes, namely pulls out the wires from the stripping tool, it pulls all wires at same time and strips all wires at the same time (all the wires fitted in that stripping tool), which can be repeated for second, third or other stripping tools that may be installed on the pallet.

Advantageously, the end portion 302 of the electric wire is separated from a main portion 301 of the electric wire by a pre-stripped portion 303, and step 702 of the method comprises abutting the end portion of the electric wire on the abutting tab portion 213 on the side of the pre-stripped portion 303.

In other words, the end portion 303 of the electric wire s placed in abutment with the clamping lever 210, the abutment being between the abutting portion 213 of the lever 210 and the side of the pre-stripped portion 303 of the end portion 302.

This allows for an easier automated stripping of the wires.

Advantageously, step 703 of the method can further comprise:
- grabbing the one or more electric wires with the mobile gripper portion 110 of the robot arm 100, and/or
- pinching the one or more electric wires 300 with the aligner portion 120 of the robot arm 100 so as to maintain alignment of the one or more electric wires 300.

This allows for removal of the wires from the stripping tool and to keep alignment of the wires.

Advantageously, the mobile gripper portion of the robot arm is moved to the stripping tool and closes with the wires inside of or within the gripper, e.g. between two jaws of the mobile gripper portion, the wires being preferably not pressed or gripped by the jaws so that the mobile gripper portion can slide along the wires until the mobile gripper portion reaches a desired position.

Advantageously, once the mobile gripper portion 110 is in the desired position relative to the wires 300, the aligner portion 120 of the robot arm 100 may move toward said wires 300 from a backward position to a frontward position wherein the wires 300 are received within a jaw of the aligner portion 120.

Advantageously, once the aligner portion 120 of the robot arm 100 is in position, the mobile gripper portion 110 thereof may press the wires 300 and then pull them out of the stripping tool 200, and then the jaw of the aligner portion 120 is preferably closed to maintain alignment of the wires 300.

Advantageously, the mobile gripper portion 110 is moved to the stripping tool 200 and closes with the wires 300 inside of the mobile gripper portion, the wires 300 being preferably not pressed so that the mobile gripper portion 110 can slide along the wires 300 until the mobile gripper portion 110 reaches its desired position.

The aligner portion 120 then moves frontward from a backward (rest) position to receive the wires within the aligner portion.

Once the aligner portion 120 is in position, the mobile gripper portion presses the wires 300 and then pulls them out of the stripping tool 200, and then the aligner portion 120 is preferably closed to maintain alignment of the wires 300 after their withdrawal from the stripping tool 200.

In some implementations, the step 705 transporting the stripping toll 200 can further comprise:
- grabbing a first electric wire on a first side in position to be welded or spliced by the welding machine or the splicing machine, and
- positioning a second electric wire in position to be spliced or welded by the welding or splicing machine, on the first side of the welding machine, or splicing machine, or on a second side of the welding or splicing machine, opposite to said first side.

Also, the step of welding 706 can include welding or splicing strands, or monolithic electric elements, of the two electric wires.

This allows to provide a solution which is convenient for both butt or dual end splicing or welding.

Advantageously, the method can further comprise the steps of:
- providing an automated system with a first pallet and a second pallet,
- installing a first stripping tool on the first pallet and a second stripping tool on the second pallet.

This allows the automated system to perform the stripping step and/or splicing or welding step at level of the splicing or welding machine with respect to one or more wires that have been installed of the first pallet while simultaneously continuing to work, at level the automatic plugging machine, (e.g. for pre-stripping and/or inserting one or more further wires in the second stripping tool that have been installed on the second pallet.

It will be understood that various modifications and/or improvements obvious to the person skilled in the art may be made to the various embodiments of the disclosure described in the present description without departing from the scope of the disclosure defined by the appended claims. The different embodiments can be combined whenever possible or necessary.

## Claims

1. A stripping tool (200) for stripping an end portion (302, 304) of an electric wire (300) having an electric conductor covered by an insulating sheath,
the stripping tool (200) comprising :
- a body (201) with at least one receiving portion (230) arranged to receive the end portion (302, 304) of the electric wire (300),
- at least one lever (210) articulated with the body (201) so as to be moveable between a rest position and a deflected position,
- a first elastic member (240) arranged to apply a return force on the lever (210) from the deflected position to the rest position,
wherein the lever (210) has a guiding portion (212) arranged in front of the receiving portion (230) of the body (201), so that the lever (210) is moved from the rest position to the deflected position by insertion of the end portion (302, 304) of the electric wire (300) into the receiving portion (230), and
wherein the lever (210) has an abutting tab portion (213) arranged to apply a stripping effort to the end portion (302, 304) of the electric wire (300) when the electric wire (300) is pulled back out of the receiving portion (230).

2. The stripping tool (200) according to claim 1, wherein the receiving portion (230) has a through hole with an insertion side (230i) and an opposite side (230o) opposed to said insertion side (230i), the receiving portion (230) being preferably conical in shape.

3. The stripping tool (200) according to claim 2, wherein the through hole has a diameter on the insertion side (230i) larger than 5 mm and a diameter on the opposed side (230o) larger than 3 mm.

4. The stripping tool (200) according to any one of the claims 1 to 3, wherein the stripping tool (200) has a plurality of receiving portions (230), preferably two or more, more preferably seven or more.

5. The stripping tool (200) according to any one of claims 1 to 4, wherein the end portion (302, 304) of the electric wire (300) is separated from a main portion (301) of the electric wire (300) by a pre-stripped portion (303), and wherein the abutting tab portion (213) of the lever (210) is arranged to abut with the end portion (302, 304) of the electric wire (300) on the side of the pre-stripped portion (303), when the end portion (302, 304) of the electric wire (300) is inserted inside the receiving portion (230).

6. The stripping tool (200) according to any one of claims 1 to 5, wherein the guiding portion (212) is arranged between the abutting portion (213) and an articulated portion (211) of the lever (210).

7. The stripping tool (200) according to claims 3 and 4, wherein the body (201) further comprises a wire guiding portion (250) disposed in the rear side of said body (201), behind said main body (201) with respect to the direction of insertion of wires into the receiving portions (230), in continuity with the respective through holes of said receiving portions (230).

8. The stripping tool (200) according to claim 7, wherein the wire guiding portion (250) comprises at least one guiding channel (251) and preferably a plurality of laterally adjacent guiding channels (251), arranged as rear extensions of respective through holes in the receiving portion (230) of the body (201), extending from the opposite side (230o) of said receiving portions (230), the guiding channels (250) being adapted to accommodate respective end portions (203) of wires to be stripped.

9. The stripping tool (200) according to claim 8, wherein the guiding channels (251) have an inverted U-shaped cross-section.

10. The stripping tool (200) according to any one of claims 7 through 9, further comprising a wire retaining member (900) having:
a core (901),
- longitudinally extending slots (920) formed in the core (901),
- locking tabs (910) respectively mounted in the slots (920), and adapted to be moved from a wire lock position to a wire release position, and vice versa, and
- a second elastic member (940) adapted to apply a return force to the locking tab (910) in order to place said tab in the wire lock position in the absence of any contrary action.

11. The stripping tool (200) according to claim 10, wherein the locking tab (910) has a sloping front surface configured to receive an external force (F) causing said locking tab (910) to move from the wire lock position to the wire release position against the force of the second elastic member (940).

12. An automated system (1) comprising the stripping tool (200) according to any one of claims 1 through 11, a welding machine (600) being preferably an ultrasonic welding machine or a splicing machine, and a robot arm (100) arranged to transport one or more electric wires (300) from the stripping tool (200) to the welding machine or splicing machine (600).

13. The automated system (1) according to claim 12, wherein the robot arm (100) comprises a mobile gripper portion (110) arranged to grab the one or more electric wires (300) and/or an aligner portion (120) arranged to maintain alignment of the one or more electric wires (300).

14. The automated system (1) according to claim 9 or 10, further comprising a fixed gripper portion (130) arranged to grab the one or more electric wires (300) nearby, or in front of, the welding machine (600) or the splicing machine.

15. A method using the automated system of claims 12 to 14 for automatic welding or splicing of one or more electric wires (300) having an electric conductor covered by an insulating sheath and having an end portion (302, 304) thereof, wherein the electric conductor has strands or monolithic electric element, the method comprising the steps of:
- inserting (701) the end portion (302, 304) of the electric wire (300) into the receiving portion (230) of the stripping tool (200),
- abutting (702) the end portion (302, 304) of the electric wire (300) on the abutting tab portion (213),
- removing (703) the end portion (302, 304) of the electric wire (300) from the receiving portion (230) so as to strip the electric wire (300),
- transporting (705) the wires to the welding or splicing machine (600),
- welding or splicing (706) strands of the at least one electric wire (300), or welding or splicing (706) strands or monolithic electric elements of at least two electric wires (300),
wherein the step of inserting (701) and the step of abutting (702) are carried out at a first area of a workstation, whereas the step of welding of splicing is carried out at a second area of said workstation, different from the first area, after execution of the step of transporting (705) wherein the stripping tool (200) with the wires contained and hold therein is transported from said first area to said second area.

16. The method according to claim 15 wherein the step of inserting (701), the step of abutting (702) are repeated (704) for another electric wire or another set of wires, and/or and the step of welding (703) is repeated on a per stripping tool basis.

17. The method according to claim 15 or 16, wherein the end portion (302, 304) of the electric wire (300) is separated from a main portion (301) of the electric wire (300) by a pre-stripped portion (303),
the step of abutting (702) further comprising abutting the end portion (302, 304) of the electric wire (300) on the abutting tab portion (213) on the side of the pre-stripped portion (303).

18. The method according to any one of claims 15 to 17, wherein the step of transporting (705) further comprises grabbing the one or more electric wires (300) with the mobile gripper portion (110), and/or pinching the one or more electric wires (300) with the aligner portion (120) of the arm (100) so as to maintain alignment of the one or more electric wires (300).

19. The method according to any one of claims 15 to 18 wherein the step of transporting (705) further comprises grabbing a first electric wire (300) on a first side in position to be welded or spliced by the welding or splicing machine (600), and positioning a second electric wire (300) in position to be welded or spliced by the welding or splicing machine (600), on the first side of said welding or splicing machine (600), or on a second side of said welding or splicing machine (600), opposite to said first side,
and wherein the step of welding (706) include welding or splicing strands, or monolithic electric elements, of the first and second electric wires (600).

20. The method according to any one of claims 15 to 19, further comprising the steps of:
- providing a first pallet and a second pallet,
- installing the stripping tool on the first pallet and another stripping tool on the second pallet.

21. The method according to any one of claims 15 to 20, further comprising the steps of:
- moving the mobile gripper portion (110) to the stripping tool (200) and closing the wires (300) inside of the mobile gripper portion (110), the wires (300) being preferably not pressed so that the mobile gripper portion (110) can slide along the wires (300) until the mobile gripper portion (110) reaches a desired position,
- moving the aligner portion (120) frontward from a backward position to receive the wires (300) within the aligner portion (120), and
- once the aligner portion (120) is in the desired position, the mobile gripper portion (110) presses the wires (300) and then pulls them out of the stripping tool (200), and then the aligner portion (120) is preferably closed to maintain alignment of the wires (300).
